# FASCICULE DE BREVET EUROPEEN

(11) **EP 4 337 608 B1**
(45) Date de publication et mention de la délivrance du brevet: **01.01.2025**
(21) Numéro de dépôt: 22727966.8
(22) Date de dépôt: 10.05.2022
(51) Int. Cl.: C01F 5/14, B01D 53/00, C02F 1/00, C05D 5/00, D21B 1/00

(54) **SUSPENSION D'HYDROXYDE DE MAGNESIUM ANTIMOUSSE**
SCHAUMVERHÜTENDE MAGNESIUMHYDROXID-SUSPENSION
ANTI-FOAMING MAGNESIUM HYDROXIDE SUSPENSION

(30) Priorité: 14.05.2021 FR 2105073
(43) Date de publication de la demande: 20.03.2024
(73) Titulaire: Timab Magnesium, 35800 Dinard (FR)
(72) Inventeur: BERTHELOT, Sylvain, 35520 LA MEZIERE (FR); MAZARÉ, François, 35400 SAINT MALO (FR)
(74) Mandataire: Cabinet Beau de Loménie
(86) Numéro de dépôt international: PCT/FR2022/050886
(87) Numéro de publication internationale: WO 2022/238649

(56) Documents cités:
- EP-A2- 0 114 755
- AU-A1- 2006 202 581
- US-A- 3 957 674
- US-A- 4 561 897
- US-A- 5 624 568

## Description

### Domaine Technique

La présente invention concerne les suspensions d'hydroxyde de magnésium et leurs utilisations, en particulier dans des procédés industriels nécessitant l'utilisation d'agents alcalins et rencontrant des problèmes de moussage, tels que l'agriculture, l'industrie agroalimentaire, du textile, des encres et revêtements, des lubrifiants, l'industrie papetière, des biotechnologies et l'industrie du traitement des eaux et des gaz, plus particulièrement dans le domaine du traitement des effluents municipaux et industriels ou du traitement des eaux de procédé ou des eaux de lavage au sein d'un procédé industriel. Il s'agit en particulier du domaine du traitement des eaux de lavage des gaz au sein d'un système de désulfuration des fumées en voie humide ou semi-humide et du traitement d'effluents en station d'épuration municipale ou industrielle notamment au niveau des étapes impliquant une aération (clarification, nitrification/dénitrification, etc.), des microorganismes biologiques (déphosphatation, biologique, méthanisation, etc.) ou de l'ajout de produits chimiques tels que des polymères ou des désinfectants. D'autres applications de cette suspension sont, par exemple, les procédés ou bioprocédés de transformation industrielle impliquant un processus de fermentation (vinification, production de bière, etc.) ou de respiration. Enfin, cette suspension peut également potentiellement être employée lors de la production de papier, à toutes les étapes de sa fabrication, depuis la production de la pâte à papier jusqu'à son étape de blanchiment y compris le traitement des eaux usées du procédé voire même pour le recyclage de ce dernier notamment lors de l'étape de désencrage.

### Technique antérieure

L'art antérieur contient divers exemples de formulation et d'utilisation de suspensions d'hydroxyde de magnésium. Ce sont généralement des suspensions concentrées aux alentours de 40 à 65% en masse de petites particules par unité de masse de suspension. Bien qu'il existe de nombreuses façons de formuler une suspension, deux grandes voies de production se distinguent dans l'état de la technique : la mise en suspension de particules solides de Mg(OH)₂ (ou de MgO préalablement hydratée) dans de l'eau ou bien la méthode dans laquelle Mg(OH)₂ est directement précipité depuis un sel magnésien.

Les suspensions d'hydroxyde de magnésium sont utilisées dans de nombreuses applications en qualité d'alkali ou agent alcalin (substance basique) comme par exemple la neutralisation des rejets acides industriels, l'ajustement du pH dans le traitement des eaux usées ou des eaux de procédé de lavage de gaz ou encore lors du blanchiment de la pâte à papier. L'utilisation d'une suspension, par opposition à l'utilisation d'un produit en poudre, présente plusieurs avantages. Parmi eux, une manipulation facilitée (dosage, transport) et l'assurance d'utiliser un produit présentant des caractéristiques constantes par rapport à un produit formulé sur le site de l'utilisateur final.

Les performances d'une suspension d'hydroxyde de magnésium sont jugées à la lumière de deux critères majeurs, sa réactivité et sa stabilité. Ces deux paramètres sont intrinsèquement liés à la nature des précurseurs et à la méthode de préparation de la suspension influençant directement les paramètres physico-chimiques de cette dernière, les paramètres les plus importants étant, la concentration en matière solide ainsi que la taille, la forme et la porosité des particules.

La réactivité d'une suspension d'hydroxyde de magnésium peut être assimilée au nombre de sites actifs par unité de masse du produit et plus largement à la surface spécifique (SSA) de la poudre. Généralement on parle de réactivité sous couvert d'une approche cinétique. Mg(OH)₂ ayant par nature, une faible solubilité dans l'eau, une réactivité élevée est requise pour la suspension dans toutes les applications précitées.

La stabilité d'une suspension d'hydroxyde de magnésium englobe plusieurs sous critères, ces derniers étant quasi exclusivement liés à sa mise en oeuvre, son utilisation et sa manipulation incluant préparation, conditionnement, transport, écoulement, pompage, etc. La littérature indique qu'une suspension est pompable lorsque le niveau de viscosité de cette dernière est tel que son agitation (maintien de la suspension sans sédimentation, ré-homogénéisation, remise en suspension) et son déplacement (transport en conduite, pompage) sont facilités. Empiriquement, il a été déterminé que les suspensions d'hydroxyde de magnésium dites pompables possèdent une viscosité dynamique inférieure à 1000 mPa.s (mesurée à l'aide d'un viscosimètre Brookfield à 20°C à 1,7 s⁻¹) et de préférence inférieure à 700 mPa.s pour être facilement pompables.

La stabilité d'une suspension sur le plan rhéologique est donc généralement réduite à sa valeur de viscosité. De façon générale, la viscosité d'une suspension de Mg(OH)₂ augmente avec l'augmentation de la concentration en matière sèche de la suspension, avec la diminution de la taille des particules de Mg(OH)₂ et l'augmentation de la surface spécifique de ces dernières.

Généralement, la viscosité des suspensions d'hydroxyde de magnésium n'augmente pas lorsque la concentration en matière solide reste en dessous des 40% massique. Dans ce cas, la suspension se comporte comme un fluide newtonien. Néanmoins, les niveaux de viscosité ne sont pas suffisants pour maintenir les particules d'hydroxyde de magnésium en suspension. La suspension déphase alors très rapidement et un lit de particules se forme en bas du contenant. Ce sédiment étant d'autant plus cohérent et difficile à disperser que les particules utilisées sont fines et réactives. Un tel résultat n'est pas envisageable car la suspension devient par la suite inutilisable.

Lorsque la concentration en matière sèche dépasse les 40% en masse, la viscosité augmente brutalement et en résulte un fluide non-newtonien rhéofluidifiant et thixotropique dont le comportement est viscoélastique voire Binghamien. Le comportement de ces suspensions est lié à l'existence d'une structure 3D au sein de cette dernière. Lorsqu'elle est mise en place, elle permet de garantir une viscosité suffisante pour que les particules ne sédimentent pas trop rapidement. Cette structure est ensuite détruite par l'application d'une contrainte mécanique supérieure à la contrainte seuil du matériau afin de provoquer l'écoulement. Ces transformations sont réversibles.

Néanmoins, lorsque la charge minérale continue d'augmenter, les interactions entre le solide et liquide porteur continuent également d'augmenter jusqu'à un stade où les structures 3D créées ne sont plus déstructurables et structurables à loisir. Le produit alors formé devient très visqueux et inutilisable. Ces changements de comportements rhéologiques sont à l'origine de nombreux inconvénients techniques parmi lesquels, l'impossibilité d'agiter et de transporter les suspensions malgré l'application de fortes contraintes de cisaillement.

Afin de diminuer ces effets lors de l'augmentation de la quantité de matière sèche, l'ajout d'un agent dispersant est une pratique bien connue de l'état de la technique. L'ajout d'un dispersant entraîne une diminution de la viscosité par réduction des interactions entre particules solides. La demande de brevet US2017/0225961 divulgue une liste d'agents dispersant particulièrement fonctionnels pour les suspensions d'hydroxyde de magnésium. Ces agents ont pour but de diminuer la viscosité et donc les effets négatifs liés aux hautes valeurs de viscosité pour que la suspension puisse ainsi recouvrir des propriétés rhéologiques intéressantes. Ces derniers sont les principaux additifs rhéologiques utilisés dans les formulations de suspension.

Dans certains cas, il est également possible de procéder à l'ajout de gélifiants ou épaississants non associatifs afin d'augmenter la viscosité à bas gradient de vitesse. Les propriétés apportées au milieu à la suite de cet ajout sont par exemple, un comportement rhéofluidifiant exacerbé et non thixotrope et un seuil d'écoulement plus important. L'avantage de ces additifs est qu'ils ne présentent pas d'effet à haut gradient. Ils sont souvent employés pour améliorer la stabilité au stockage. Parmi ces agents, on retrouve les dérivés de la cellulose, la gomme Xanthane, les alginates, les alcools polyvinyliques (PVA), les polyéthylèneglycol (PEG) ou polyoxyéthylènes (POE), les polyvinylpyrrolidones (PVP) ou encore certains membres de la famille des (co)polymères acryliques (ASE).

L'ajout de tels agents dans la formulation donnera lieu à des nouveaux mécanismes d'interaction complexes solvant/particules, particules/particules, particules/agent, agent/agent, agent/solvant. Ainsi, la détermination de la dose optimale est généralement un travail empirique minutieux. La suspension est alors dite, en équilibre et stable vis-à-vis des changements rhéologiques pouvant intervenir lors de ses manipulations successives, elle est notamment moins sensible aux phénomènes de vieillissement constatés avec certaines suspensions.

En effet, le vieillissement des suspensions d'hydroxyde de magnésium est généralement lié à des variations de la surface spécifique ou du système cristallin des particules mais également à la ré-agglomération de particules entre elles conduisant à leur sédimentation. La stabilité d'une suspension d'hydroxyde de magnésium est généralement évaluée de manière temporelle. Une suspension peu tributaire au vieillissement voit sa viscosité peu évoluer au cours du temps.

Le vieillissement des suspensions peut s'opérer dans des conditions stationnaires (phase de repos), dynamiques (phase d'agitation) ou mixtes (alternance repos-agitation). Le vieillissement en conditions stationnaires est généralement caractérisé par une sédimentation plus ou moins rapide en fonction de la taille des particules générant des zones où la concentration en matière sèche est plus élevée.

Les phases de vieillissement des suspensions reflètent des pratiques industrielles courantes (alternance de cycles de stockage et de transport). Durant ces phases, l'agitation évite une sédimentation néfaste à l'optimisation du produit. Plus une suspension est stable (dans les conditions définies précédemment), moins cette suspension requerra d'énergie pour pallier à sa sédimentation. Par ailleurs, la meilleure stabilité d'une suspension réduira les risques de colmatage dans des zones de faible turbulence notamment au niveau des cavités d'une pompe ou au niveau de coudes rencontrés sur le chemin hydraulique.

En conclusion, la formulation d'une suspension d'hydroxyde de magnésium à haute réactivité et stabilité requiert une maîtrise parfaite de la formulation desdites suspensions notamment au niveau de la sélection de la matière première et des additifs, leur quantité, la séquence d'ajout de ces derniers et tous les traitements physiques appliqués pendant la mise en suspension (agitation, broyage, dilution, etc.). Le résultat d'une telle opération est une suspension en équilibre où toute perturbation liée à l'ajout d'un composé chimique post-production peut perturber cet équilibre et diminuer les performances de réactivité et/ou de stabilité du produit.

Les problèmes de moussage sont fréquemment rencontrés dans l'industrie. Les mousses qui y sont rencontrées peuvent être de différente nature (aqueuse, organique ou biologique). Dans tous les cas, elles se caractérisent par la dispersion de bulles de gaz (O₂, CO₂, air, etc.) dans un liquide. La balance entre l'arrivée de nouvelles bulles à la surface et leur persistance détermine si une accumulation de bulles est envisageable et donc si la formation d'une mousse est possible. La persistance de cette mousse est conditionnée par la stabilité de l'interface gaz/liquide séparant les bulles les unes des autres. Thermodynamiquement, les mousses sont instables. En revanche, elles peuvent être métastables pour une période temporelle donnée. Les facteurs ayant un impact direct sur la stabilité des mousses sont les suivants :
A - Drainage des surfaces des bulles par gravité ;
B - Diffusion de gaz à travers les bulles ;
C - Balance des forces attractives et répulsives entre les bulles ;
D - Transport de liquide par capillarité au sein des interfaces gaz/liquide.

Certains composés chimiques ont la capacité d'augmenter la durée de persistance des mousses. Ils sont qualifiés d'agents moussants. Ces agents peuvent être de nature physico-chimique différente. Il existe 3 grandes familles d'agents moussants.
- Les tensioactifs sont des molécules généralement composés d'une tête polaire hydrophile et d'une queue polaire hydrophobe (effet sur A, B, C et D).
- Les macromolécules peuvent être des polymères ou des molécules organiques, ils agissent généralement sur A et C en leur qualité d'électrolyte ou de modificateur de viscosité.
- Les particules solides peuvent réduire la tension de surface des liquides et ainsi participer à la stabilisation de la mousse. La combinaison de gaz, de liquide et de particules solides donne naissance à de l'écume. Les particules adhèrent aux interfaces gaz/liquide et participent ainsi à leur renforcement contre les forces destructrices pouvant conduire à la coalescence de la mousse ou écume (agitation mécanique, injection d'air sous pression, etc.). Elles réduisent également le drainage de l'interface participant d'autant plus à la stabilisation de la mousse.

Les problèmes de moussage peuvent avoir des conséquences néfastes sur la bonne conduite d'un procédé industriel ou un procédé de traitement. Le problème le plus recensé est le débordement des réacteurs contenant le liquide moussant en engendrant des problèmes de sécurité (traitement d'effluents contaminés) ou de perte de production (cuves de fermentation). Le nettoyage subséquent associé à ces débordements est souvent fastidieux.

Dans le cadre des procédés de traitement ou procédés industriels impliquant l'utilisation d'un alkali (ou agent alcalin) et plus particulièrement au sein d'un procédé de traitement des eaux de lavage des gaz au sein d'un système de désulfuration embarquée des fumées en voie humide ou semi-humide, les problèmes de moussages peuvent être solutionnés de différentes manières.

Parmi les solutions pouvant facilement être mises en oeuvre, on peut citer : la réduction des opérations en cascade, le colmatage de fuites, la réduction de la vitesse des gaz, l'incorporation de vases d'expansion, etc. D'autres solutions, plus contraignantes, peuvent être envisagées avec notamment la modification de la taille des équipements amenés à transporter ou contenir le liquide (potentiellement) moussant ou ajout d'ouvrages auxiliaires tels que des bassins de débordement ou de rétention.

Des méthodes mécaniques peuvent également être mises en oeuvre telles que l'installation d'un dispositif de pulvérisation, un dispositif de désaération sous vide, de centrifugation, un générateur d'ondes ou encore un dispositif de dépoussiérage électrostatique. Il est également envisageable de procéder à une modification de la température du liquide. En effet, une augmentation de cette dernière abaisse la tension de surface du liquide. Enfin, l'injection d'air sec est également une potentielle solution à condition qu'elle soit bien contrôlée pour ne pas engendrer la génération de mousse supplémentaire.

Toutefois ces méthodes peuvent être difficile à mettre en oeuvre et ne sont pas toujours suffisantes pour répondre efficacement et de manière optimale aux problèmes de moussage, en particulier dans le domaine des procédés de traitement des eaux de lavage des gaz au sein d'un système de désulfuration embarquée des fumées en voie humide ou semi-humide. Effectivement, la majorité de ces systèmes ont été dimensionnés sans tenir compte des potentiels problèmes de moussage pouvant survenir au sein de l'unité mais de sorte que le traitement du gaz soit optimisé. De ce fait, la modification des paramètres du procédé n'est pas triviale.

De même, ces unités, installées à bord de navires marchands ou de navires de croisières sont généralement disposées dans des zones étroites et confinées du bateau. L'installation d'ouvrages auxiliaires ou de dispositifs physiques afin de perturber la stabilisation de la mousse impose de trop grandes contraintes techniques, logistiques et économiques. Il en va de même pour les dispositifs permettant de contrôler le niveau de la mousse au sein du système et remédier aux problèmes de moussage par l'injection continue ou périodique d'un agent démoussant.

Une autre solution est d'ajouter un agent anti-mousse directement dans le procédé.

US 5 624 568, US 4 561 897 et EP 0 114 755 divulguent des agents anti-mousse comprenant une huile à base de silicone et son utilisation dans une suspension aqueuse d'hydroxyde de magnésium. 11

Or les inventeurs se sont aperçus de façon surprenante qu'il était possible d'utiliser l'agent alcalin représenté par la suspension d'hydroxyde de magnésium en tant qu'agent anti-mousse en préparant une suspension particulière d'hydroxyde de magnésium ayant une telle fonction sans que cette dernière ne perde ses performances de réactivité et/ou de stabilité.

### Exposé de l'invention

La présente invention concerne donc une suspension aqueuse d'hydroxyde de magnésium comprenant :
a) au moins 40% en masse, avantageusement au moins 50% en masse, plus avantageusement au moins 53% en masse, par rapport à la masse totale de la suspension, de particules d'hydroxyde de magnésium;
b) de 0,001% à 5% en masse, avantageusement de 0,01% à 4% en masse, plus avantageusement de 0,1% à 3% en masse, par rapport à la masse totale de l'hydroxyde de magnésium, d'au moins un dispersant, avantageusement sélectionné dans le groupe constitué par les homopolymères ou copolymères de l'acide acrylique ou de l'acide méthacrylique et leurs sels et un mélange de ceux-ci et les lignosulfonates et leurs mélanges, en particulier choisis parmi les polycarboxylates, les polyéther polycarboxylates, les polyacrylates, les copolymères polyacrylates, les copolymères acryliques et/ou méthacryliques, les sels (en particulier les sels de polyacrylates) et un mélange de ceux-ci, et
c) de 0,001% à 5% en masse, avantageusement de 0,005% à 1% en masse, plus avantageusement de 0,01% à 0,5% en masse, par rapport à la masse totale de la suspension, d'au moins un agent anti-mousse, avantageusement sélectionné dans le groupe constitué par les huiles organiques, les polyglycols, les esters ou polyesters d'acide gras et leurs mélanges, lesdites huiles ou polyglycols pouvant contenir des particules organiques ou minérales en suspension, caractérisé en ce que le au moins un agent anti-mousse ne comprend pas d'huile de silicone.

La suspension selon l'invention comprend donc (a) des particules d'hydroxyde de magnésium en une teneur d'au moins 40% en masse, avantageusement d'au moins 50% en masse, plus avantageusement d'au moins 53% en masse, par rapport à la masse totale de la suspension. La teneur en ces particules (a) peut même aller jusqu'à 58% en masse et même jusqu'à 65-70% en masse.

Dans un mode de réalisation, les particules d'hydroxyde de magnésium ont une taille moyenne en volume, spécifiquement un diamètre moyen en volume, D₉₀ inférieure à 200 µm, préférablement inférieur à 100 µm , en particulier inférieur à 45 µm, plus préférablement inférieur à 25 µm, encore plus préférablement inférieur à 15 µm, mesuré par un granulomètre laser, spécifiquement le Mastersizer 2000 de Malvern Instruments, plus spécifiquement obtenue après dilution de la suspension au 20000^{ème} et passage au granulomètre.

Dans un autre mode de réalisation, les particules d'hydroxyde de magnésium ont une taille moyenne en volume, spécifiquement un diamètre moyen en volume, D₅₀ inférieure à 40 µm, préférablement inférieur à 20 µm, en particulier inférieur à 7 µm, encore plus préférablement inférieur à 2,5 µm, mesuré par un granulomètre laser, spécifiquement le Mastersizer 2000 de Malvern Instruments, plus spécifiquement obtenue après dilution de la suspension au 20000^{ème} et passage au granulomètre.

Dans un autre mode de réalisation, la surface spécifique des particules d'hydroxyde de magnésium est comprise entre 5 et 100m²/g mesurée par Méthode BET multipoints par adsorption de N₂, en particulier avec un équipement Micromeritics Gemini VII.

La suspension selon l'invention comprend donc en outre (b) au moins un dispersant, en une teneur de 0,001% à 5% en masse, avantageusement de 0,01% à 5% en masse, en particulier de 0,01% à 4% en masse, plus avantageusement de 0,1% à 5% en masse, en particulier de 0,1% à 3% en masse, par rapport à la masse totale de l'hydroxyde de magnésium.

Dans un mode de réalisation particulier, le au moins un dispersant est sélectionné dans le groupe constitué par les homopolymères ou copolymères de l'acide acrylique ou de l'acide méthacrylique et leurs sels et un mélanges de ceux-ci et les lignosulfonates et leurs mélanges, en particulier choisis parmi les polycarboxylates, les polyéther polycarboxylates, les polyacrylates, les copolymères polyacrylates, les copolymères acryliques et/ou méthacryliques, les sels (en particulier les sels de polyacrylates), tels que les sels de sodium (en particulier les polyacrylates de sodium) et un mélange de ceux-ci. Spécifiquement le au moins un dispersant est un polyéther polycarboxylate ou un polyacrylate, en particulier un sel de polyéther polycarboxylate ou de polyacrylate, en particulier un sel de polyacrylate, plus particulièrement un polyacrylate de sodium. Le dispersant peut se trouver sous la forme d'une solution aqueuse, en particulier ayant une teneur en solide de 40% en masse par rapport à la masse totale de la solution aqueuse de dispersant. Avantageusement, le dispersant n'est pas ou ne comprend pas d'alkyl benzène sulfonate, plus avantageusement il ne s'agit pas de l'isopropylamine dodécyl benzène sulfonate.

La suspension selon l'invention comprend par ailleurs en outre (c) au moins un agent anti-mousse, en une teneur de 0,001% à 5% en masse, avantageusement de 0,005% à 1% en masse, plus avantageusement de 0,01% à 0,5% en masse, encore plus avantageusement en une teneur comprise entre 0,01% et 0,05% en masse, en particulier en une teneur comprise entre 0,01% et 0,04 % par rapport à la masse totale de la suspension, caractérisé en ce que le au moins un agent anti-mousse ne comprend pas d'huile de silicone.

Ledit au moins un agent anti-mousse ne comprend pas d'huile de silicone (telles que les polydiméthysiloxanes en particulier commercialisés par la société Kurita ou par la société ArrMaz) ou de produit siliconé ou de polydiméthysiloxanes ou de produit à base de silicone ou à base d'huile de silicone, plus particulièrement avec ou sans particules de silice, plus avantageusement l'agent anti-mousse n'est pas une huile de silicone, avec ou sans particules de silice, encore plus particulièrement l'agent anti-mousse n'est pas un polydiméthysiloxane avec ou sans particules de silice.

Dans un mode de réalisation particulier, le au moins un agent anti-mousse est sélectionné dans le groupe constitué par les huiles organiques (telles que les huiles hydrocarbonées), les polyglycols, les esters ou polyesters d'acide gras (tels que les polyesters polyols estérifiés par des acides gras naturels en particulier commercialisés par la société ArrMaz, les esters d'acides gras naturels, en particulier commercialisés par la société ArrMaz, et les polyéthers polyols estérifiés par des acides gras naturels, en particulier commercialisés sous la dénomination Flofoam^{™} H par la société SNF) et leurs mélanges, lesdites huiles ou polyglycols pouvant contenir des particules organiques (telles que des particules de cires) ou minérales (telles que des particules de dioxyde de silice) en suspension.

Dans un autre mode de réalisation particulier, le au moins un agent anti-mousse est sélectionné dans le groupe constitué par les huiles organiques (telles que les huiles hydrocarbonées), les esters ou polyesters d'acide gras (tels que les polyesters polyols estérifiés par des acides gras naturels en particulier commercialisés par la société ArrMaz, les esters d'acides gras naturels, en particulier commercialisés par la société ArrMaz, et les polyéthers polyols estérifiés par des acides gras naturels, en particulier commercialisés sous la dénomination Flofoam^{™} H par la société SNF) et leurs mélanges, lesdites huiles pouvant contenir des particules organiques (telles que des particules de cires) en suspension.

Dans encore un autre mode de réalisation particulier, le au moins un agent anti-mousse est sélectionné dans le groupe constitué par les huiles organiques (telles que les huiles hydrocarbonées), les polyéthers polyols estérifiés par des acides gras naturels (par exemple ayant une viscosité à 20°C de 200mPa.s, et/ou une densité à 20°C de 0,92g/cm³, en particulier commercialisés sous la dénomination Flofoam^{™} H par la société SNF, et leurs mélanges, lesdites huiles pouvant contenir des particules organiques (telles que des particules de cires) en suspension.

Dans encore un autre mode de réalisation particulier, le au moins un agent anti-mousse est une dispersion de particules organiques, en particulier de cire, dans une huile organique, en particulier une huile hydrocarbonée, avantageusement une dispersion de particules de cire dans une huile hydrocarbonée. Plus particulièrement le au moins un agent anti-mousse a une viscosité à 20°C de 350mPa.s, et/ou une densité à 20°C de 0,855g/cm³, et peut être disponible commercialement sous la dénomination Flofoam^{™} D chez la société SNF.

La suspension aqueuse d'hydroxyde de magnésium selon l'invention comprend donc avantageusement de l'eau (d) comme unique solvant.

La suspension selon l'invention peut optionnellement contenir en outre un épaississant ou gélifiant non associatif, en particulier tel que décrit ci-dessus (par exemple des dérivés de la cellulose, la gomme Xanthane, les alginates, les alcools polyvinyliques (PVA), les polyéthylèneglycol (PEG) ou polyoxyéthylènes (POE), les polyvinylpyrrolidones (PVP) ou encore certains membres de la famille des (co)polymères acryliques (ASE)), des sels alcalins, (par exemple acétate de magnésium, nitrate de potassium), et des conditionneurs acides (par exemple acide acétique, acide citrique) ou un mélange de ceux-ci.

Dans un mode de réalisation avantageux, la suspension aqueuse d'hydroxyde de magnésium selon l'invention est constituée essentiellement par, en particulier constituée par, les particules d'hydroxyde de magnésium (a), le dispersant (b), l'agent anti-mousse (c) et de l'eau (d) dans les teneurs indiquées ci-dessus.

Dans un mode de réalisation, la viscosité de la suspension aqueuse d'hydroxyde de magnésium selon l'invention, mesurée à 1,7 s⁻¹ à 20°C avec un viscosimètre Brookfield, est inférieure à 1000 mPa.s, de préférence inférieure à 700 mPa.s, en particulier inférieure à 300 mPa.s. Dans un mode de réalisation avantageux, la suspension aqueuse d'hydroxyde de magnésium selon l'invention est stable en phase de repos à température ambiante. Avantageusement le résultat de son « 7^{ème} jour 2^{nd} pour test » est d'au moins 90%.

L'état de l'art tel que la demande de brevet US2017/0225961 indique que la stabilité d'une suspension d'Hydroxyde de Magnésium peut être évaluée grâce à la méthode du Pour test. Il s'agit d'une méthode qui permet d'évaluer la quantité massique de produit pouvant être extraite d'un contenant donné après 7 jours ou 14 jours.

Dans ce test, 50 g d'échantillon de suspension d'hydroxyde de magnésium sont versés dans une bouteille de 60 mL en PP (polypropylène) ou HDPE (polyéthylène haute densité). Le poids total de l'ensemble est ensuite mesuré ainsi que la hauteur du ménisque de la suspension par rapport à la base du contenant. L'échantillon est ensuite laissé au repos pendant 7 ou 14 jours.

Après 7 jours ou 14 jours, le niveau de sédiment est repéré et la hauteur de sédiment est mesurée par rapport à la base. Ensuite, le contenant est ouvert et le produit est autorisé à s'écouler pendant 30 secondes. Ensuite l'échantillon est refermé et la masse résiduelle est évaluée. La masse résultante correspond à la masse du « 7^{ème} jour ou 14^{ème} jour - 1^{er} pour test ». Elle est ensuite comparée à la masse initiale de l'échantillon et le pourcentage d'extraction est ensuite calculé. Ensuite le contenant est réagité et le produit est à nouveau autorisé à s'écouler pendant 30 secondes. L'échantillon est refermé et la masse résiduelle est évaluée. La masse résultante correspond à la masse du « 7^{ème} jour ou 14^{ème} jour 2^{nd} pour test » et est ensuite comparée à la masse initiale de l'échantillon. Le résultat est ensuite exprimé par le rapport (en %) entre la masse du « 7^{ème} jour ou 14^{ème} jour 2^{nd} pour test » et la masse initiale de l'échantillon.

La présente invention concerne en outre l'utilisation de la suspension aqueuse d'hydroxyde de magnésium selon l'invention pour le traitement des eaux de lavage des gaz au sein d'un système de désulfuration embarquée des fumées en voie humide ou semi-humide, le traitement d'effluents en station d'épuration municipale ou industrielle, notamment au niveau des étapes impliquant une aération (clarification, nitrification/dénitrification, etc.), des microorganismes biologiques (déphosphatation, biologique, méthanisation, etc.) ou de l'ajout de produits chimiques tels que des polymères ou des désinfectants, dans les procédés ou bioprocédés de transformation industrielle impliquant un processus de fermentation (vinification, production de bière, etc.) ou de respiration ou dans le procédé de production de papier, en particulier à toutes les étapes de sa fabrication, depuis la production de la pâte à papier jusqu'à son étape de blanchiment y compris le traitement des eaux usées du procédé voire même pour le recyclage de ce dernier notamment lors de l'étape de désencrage, ou encore dans l'agriculture. En particulier cette utilisation est en tant qu'agent alcalin anti-mousse. Ainsi avantageusement la suspension aqueuse d'hydroxyde de magnésium selon l'invention est utilisée dans le domaine de l'agriculture, de l'industrie agroalimentaire, du textile, des encres et revêtements, des lubrifiants, l'industrie papetière, des biotechnologies et l'industrie du traitement des eaux et des gaz, plus particulièrement dans le domaine du traitement des effluents municipaux et industriels ou du traitement des eaux de procédé ou des eaux de lavage au sein d'un procédé industriel.

La présente invention sera mieux comprise à la lecture de la description des figures et des exemples qui suivent qui sont donnés à titre indicatif, non limitatif.

### Brève description des dessins

La figure 1 représente la courbe de pH en fonction du temps de l'eau acidifiée dans lequel une suspension d'hydroxyde de magnésium standard (MH1, MH2 et MH3) ou une suspension d'hydroxyde de magnésium selon l'invention (MH1AM4, MH2AM4 et MH3AM4) est ajoutée pour neutraliser l'effluent dans les conditions de l'exemple 2.1.
La figure 2 représente un schéma de principe d'un système de désulfuration embarqué.

### EXEMPLES

### Exemple 1 : test de différents agents anti-mousse

Les tests ont été réalisés de façon à se rapprocher le plus possible des conditions de moussage rencontrées au sein d'un système de désulfuration embarquée des fumées en voie humide ou semi-humide.

Le matériel utilisé est :
- de l'eau de mer acidifiée (pH = 2) (EDMA) ;
- une suspension d'hydroxyde de magnésium (MH1) contenant :
   53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre), et
   0,25% en masse par rapport à la masse de particules d'un dispersant Polyéther polycarboxylate en solution aqueuse ayant une teneur en solide de 40% ;
- une suspension d'hydroxyde de magnésium standard (MH2) contenant :
   58% en masse par rapport à la masse total de la suspension de particules d'hydroxyde de magnésium de distribution granulométrique D₁₀ = 2,36µm, D₅₀ = 16,2 µm et D₉₀ = 66,4 µm (mesurée par le granulomètre laser Mastersizer 2000 de Malvern Instruments après dilution de la suspension au 20000^{ème} et passage au granulomètre), et
   2,3% en masse par rapport à la masse de particules d'un dispersant polyacrylate de sodium en solution aqueuse ayant une teneur en solide de 40% ;
- une suspension d'hydroxyde de magnésium (MH3) contenant :
   53% en masse par rapport à la masse total de la suspension de particules d'hydroxyde de magnésium de distribution granulométrique D₁₀ = 0,96 µm, D₅₀ = 4,86 µm et D₉₀ = 37,42 µm (mesurée par le granulomètre laser Mastersizer 2000 de Malvern Instruments après dilution de la suspension au 20000^{ème} et passage au granulomètre), et
   5,0% en masse par rapport à la masse de particules d'un dispersant appartenant à la catégorie des lignosulfonates et de leurs mélanges en solution aqueuse ayant une teneur en solide de 40% ;
- 5 agents anti-mousses différents ;
- Récipient plastique d'agitation rempli au ¼ :
   Volume : 80 mL
   Cylindre de hauteur : h = 8,3 cm.

La forme du récipient et la quantité de liquide ajouté ont été sélectionnés de sorte à accentuer les phénomènes de moussage.

Les différents agents anti-mousses utilisés sont indiqués dans le tableau 1 ci-dessous.

**Tableau 1 - l'agent anti-mousse AM7 n'est pas selon l'invention**

| **Agent anti-mousse** | **Fournisseur** | **Famille chimique** |
|---|---|---|
| AM1 | ArrMarz (USA) | Polyester(s) polyol(s) estérifiés par des acides gras naturels |
| AM4 | SNF (FR) (Flofoam D) | Dispersion hydrocarbonée de composants organiques |
| AM5 | ArrMarz (USA) | Polyester(s) polyol(s) estérifiés par des acides gras naturels |
| AM6 | SNF (FR) (Flofoam H) | Mélanges de polyéthers polyols estérifiés par des acides gras naturels |
| AM7 | Kurita (FR) | Polydiméthylsiloxanes |

La méthodologie du test est la suivante :
1. Dans le récipient est ajouté 20 mL d'EDMA.
2. Une quantité de 6 à 24 mg/L de suspension d'hydroxyde de magnésium est ensuite ajoutée pour neutraliser l'eau jusqu'au pH de 6.
3. Une quantité de 5 ppm par rapport à la quantité de liquide présent dans le milieu d'agent anti-mousse est ensuite ajoutée au système.
4. Le récipient est scellé puis agité manuellement pendant 30 secondes.
5. La hauteur de la mousse formée est mesurée en % par rapport à la hauteur totale du cylindre.
6. Une seconde dose de 15 ppm par rapport à la quantité de liquide présent dans le milieu d'agent anti-mousse est ensuite ajoutée puis les étapes 4 et 5 sont reconduites.
7. Une troisième dose de 30 ppm par rapport à la quantité de liquide présent dans le milieu d'agent anti-mousse est ensuite ajoutée puis les étapes 4 et 5 sont reconduites.

Les résultats sont rassemblés dans le tableau 2 suivant.

**Tableau 2**

| **Suspension** | **Agent anti-mousse** | **dosage total en ppm par rapport à la quantité de liquide présente dans le milieu** | **hauteur de mousse résiduelle en %** | **Commentaires** |
|---|---|---|---|---|
| MH1 | AM1 | 5 | 8,3 | Faible écume instable-Coalescence très rapide |
| MH1 | AM1 | 15 | 0 | Pas de moussage |
| MH1 | AM4 | 5 | 0 | Pas de moussage |
| MH1 | AM5 | 5 | 8,3 | Légère écume non homogène - |
| | | | | Coalescence rapide |
| MH1 | AM5 | 15 | 0 | Pas de moussage |
| MH1 | AM6 | 5 | 0 | Pas de moussage |
| MH1 | AM7 | 5 | 8,3 | Légère écume non homogène - Coalescence moyenne |
| MH1 | AM7 | 15 | 8,3 | Légère écume non homogène - Coalescence moyenne |
| MH1 | AM7 | 30 | 0 | Pas de moussage |
| MH2 | AM4 | 5 | 0 | Pas de moussage |
| MH3 | AM4 | 5 | 0 | Pas de moussage |

Il faut mettre beaucoup plus d'agent anti-mousse AM7 (30ppm) pour obtenir une absence de moussage. L'agent AM7 n'est pas selon l'invention. Il s'agit donc de l'agent anti-mousse le moins efficace. Bien que tous les autres agents anti-mousses aient un effet, les agents anti-mousses AM4 et AM6 ont démontré une efficacité optimale dans ce test. En effet, ils empêchent l'apparition du moussage et ce pour la dose minimale ajoutée dans l'effluent. Dès lors, les expériences avec ces agents ont été répétées en utilisant de l'eau de procédé (pH = 5, présence de sulfates et de résidus de combustion incomplète de fioul lourd) préalablement acidifiée pour évaluer si l'efficacité de ces agents est maintenue dans un contexte se rapprochant plus de la réalité. Les résultats sont résumés dans le tableau 3 ci-après.

**Tableau 3**

| **Suspension** | **Agent anti-mousse** | **dosage total en ppm par rapport à la quantité de liquide présente dans le milieu** | **hauteur de mousse résiduelle en %** | **Commentaires** |
|---|---|---|---|---|
| MH1 | AM4 | 5 | 0 | Pas de moussage |
| MH1 | AM6 | 5 | 5 | Légère écume périphérique |
| | | | | - Coalescence assez rapide |
| MH2 | AM4 | 5 | 0 | Pas de moussage |
| MH3 | AM4 | 5 | 0 | Pas de moussage |

Il apparaît donc que l'agent anti-mousse AM4 soit l'agent qui possède le plus de pouvoir antimoussant pour le système en question. Les autres exemples ont été réalisés avec cet agent anti-mousse.

### Exemple 2 : tests de réactivité et de stabilité de la suspension selon l'invention contenant l'anti-mousse AM4

Ces tests ont pour but d'évaluer les propriétés antimoussantes de la suspension selon l'invention contenant l'anti-mousse AM4 tout en quantifiant l'impact de l'ajout de cet anti-mousse sur sa réactivité et stabilité.

### Exemple 2.1 : réactivité de la suspension

Le matériel utilisé est :
- de l'eau potable acidifiée à pH = 3 ;
- une suspension d'hydroxyde de magnésium standard (MH1) contenant :
   53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre), et
   0,25% en masse par rapport à la masse de particules d'un dispersant Polyéther polycarboxylate en solution aqueuse ayant une teneur en solide de 40% ;
- une suspension d'hydroxyde de magnésium selon l'invention (MH1AM4) contenant :
   53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre),
   0,25% en masse par rapport à la masse de particules d'un dispersant Polyéther polycarboxylate en solution aqueuse ayant une teneur en solide de 40% et
   1000 ppm d'agent anti-mousse AM4 ;
- une suspension d'hydroxyde de magnésium standard (MH2) contenant :
   58% en masse par rapport à la masse total de la suspension de particules d'hydroxyde de magnésium de distribution granulométrique D₁₀ = 2,36µm, D₅₀ = 16,2 µm et D₉₀ = 66,4 µm (mesurée par le granulomètre laser Mastersizer 2000 de Malvern Instruments après dilution de la suspension au 20000^{ème} et passage au granulomètre), et
   2,3% en masse par rapport à la masse de particules d'un dispersant polyacrylate de sodium en solution aqueuse ayant une teneur en solide de 40% ;
- une suspension d'hydroxyde de magnésium selon l'invention (MH2AM4) contenant :
   58% en masse par rapport à la masse total de la suspension de particules d'hydroxyde de magnésium de distribution granulométrique D₁₀ = 2,36µm, D₅₀ = 16,2 µm et D₉₀ = 66,4 µm (mesurée par le granulomètre laser Mastersizer 2000 de Malvern Instruments après dilution de la suspension au 20000^{ème} et passage au granulomètre), et
   2,3% en masse par rapport à la masse de particules d'un dispersant polyacrylate de sodium en solution aqueuse ayant une teneur en solide de 40% et
   1000 ppm d'agent anti-mousse AM4 ;
- une suspension d'hydroxyde de magnésium standard (MH3) contenant : 53% en masse par rapport à la masse total de la suspension de particules d'hydroxyde de magnésium de distribution D₁₀ = 0,96 µm, D₅₀ = 4,86 µm et D₉₀ = 37,42 µm (mesurée par le granulomètre laser Mastersizer 2000 de Malvern Instruments après dilution de la suspension au 20000^{ème} et passage au granulomètre), et
   5,0% en masse par rapport à la masse de particules d'un dispersant appartenant à la catégorie des lignosulfonates et de leurs mélanges ayant une teneur en solide de 40% ;
- une suspension d'hydroxyde de magnésium selon l'invention (MH3AM4) contenant :
   53% en masse par rapport à la masse total de la suspension de particules d'hydroxyde de magnésium de distribution granulométrique D₁₀ = 0,96 µm, D₅₀ = 4,86 µm et D₉₀ = 37,42 µm (mesurée par le granulomètre laser Mastersizer 2000 de Malvern Instruments après dilution de la suspension au 20000^{ème} et passage au granulomètre), et
   5,0% en masse par rapport à la masse de particules d'un dispersant appartenant à la catégorie des lignosulfonates et de leurs mélanges ayant une teneur en solide de 40% et
   1000 ppm d'agent anti-mousse AM4 ;
- un pH-mètre.

La méthodologie du test est la suivante : Une dose de 1700 mg/L de suspension d'hydroxyde de magnésium est ajoutée pour neutraliser l'effluent. L'évolution du pH de la solution est suivie en fonction du temps et tracée.

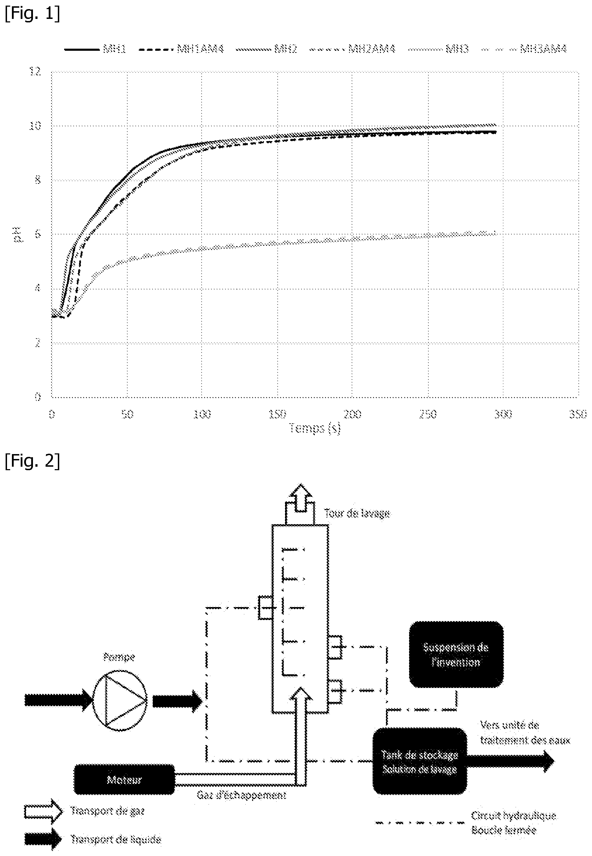

Les résultats sont représentés dans la figure 1. Au regard des résultats, la réactivité d'une suspension selon l'invention contenant 1000 ppm d'agent anti-mousse AM4 est peu impactée par sa présence. Le comportement cinétique des deux suspensions redevient identique au bout de 3,5 minutes de réaction. Les temps alloués aux alcalins pour réagir au sein d'un système industriel sont de plus grand ordre de grandeur.

### Exemple 2.2 : stabilité de la suspension

Le matériel utilisé est :
- une suspension d'hydroxyde de magnésium standard (MH1) telle que décrite dans l'exemple 2.1 ;
- une suspension d'hydroxyde de magnésium selon l'invention (MH1AM4) contenant :
   53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre),
   0,25% en masse par rapport à la masse de particules d'un dispersant Polyéther polycarboxylate en solution aqueuse ayant une teneur en solide de 40% et
   de 200 à 500 ppm d'agent anti-mousse AM4 ;
- une suspension d'hydroxyde de magnésium standard (MH2) telle que décrite dans l'exemple 2.1 ;
- une suspension d'hydroxyde de magnésium selon l'invention (MH2AM4) contenant :
   58% en masse par rapport à la masse total de la suspension de particules d'hydroxyde de magnésium de distribution granulométrique D₁₀ = 2,36µm, D₅₀ = 16,2 µm et D₉₀ = 66,4 µm (mesurée par le granulomètre laser Mastersizer 2000 de Malvern Instruments après dilution de la suspension au 20000^{ème} et passage au granulomètre), et
   2,3% en masse par rapport à la masse de particules d'un dispersant polyacrylate de sodium en solution aqueuse ayant une teneur en solide de 40% et
   de 200 à 500 ppm d'agent anti-mousse AM4 ;
- une suspension d'hydroxyde de magnésium standard (MH3) telle que décrite dans l'exemple 2.1 ;
- une suspension d'hydroxyde de magnésium selon l'invention (MH3AM4) contenant :
   53% en masse par rapport à la masse total de la suspension de particules d'hydroxyde de magnésium de distribution granulométrique D₁₀ = 0,96 µm, D₅₀ = 4,86 µm et D₉₀ = 37,42 µm (mesurée par le granulomètre laser Mastersizer 2000 de Malvern Instruments après dilution de la suspension au 20000^{ème} et passage au granulomètre), et
   5,0% en masse par rapport à la masse de particules d'un dispersant appartenant à la catégorie des lignosulfonates et de leurs mélanges ayant une teneur en solide de 40% et
   de 200 à 500 ppm d'agent anti-mousse ;
- Viscosimètre Brookfield « RV series ».

La viscosité des suspensions testées est mesurée à 1,7 s⁻¹ et à 20°C. Les résultats sont présentés dans le tableau 4 ci-après.

**Tableau 4**

| **N°** | **Suspension** | **Dose d'AM 4 (ppm)** | **Viscosité (mPa.s)** | **Commentaires** |
|---|---|---|---|---|
| **1** | MH1 | 0 | 180 | Suspension standard d'origine MH1 |
| **2** | MH1AM4 | 200 | 180 | Pas de modifications macroscopiques visibles à l'œil nu |
| **3** | MH1AM4 | 300 | 170 | Pas de modifications macroscopiques visibles à l'œil nu |
| **4** | MH1AM4 | 400 | 150 | Pas de modifications macroscopiques visibles à l'œil nu |
| **5** | MH1AM4 | 500 | 150 | Pas de modifications macroscopiques visibles à l'œil nu |
| **6** | MH2 | 0 | 130 | Suspension standard |
| | | | | d'origine MH2 |
| **7** | MH2AM4 | 200 | 130 | Pas de modifications macroscopiques visibles à l'œil nu |
| **8** | MH2AM4 | 300 | 120 | Pas de modifications macroscopiques visibles à l'œil nu |
| **9** | MH2AM4 | 400 | 120 | Pas de modifications macroscopiques visibles à l'œil nu |
| **10** | MH2AM4 | 500 | 120 | Pas de modifications macroscopiques visibles à l'œil nu |
| **11** | MH3 | 0 | 100 | Suspension standard d'origine MH3 |
| **12** | MH3AM4 | 200 | 100 | Pas de modifications macroscopiques visibles à l'œil nu |
| **13** | MH3AM4 | 300 | 110 | Pas de modifications macroscopiques visibles à l'œil nu |
| **14** | MH3AM4 | 400 | 110 | Pas de modifications macroscopiques visibles à l'œil nu |
| **15** | MH3AM4 | 500 | 110 | Pas de modifications macroscopiques visibles à l'œil nu |

La viscosité de la suspension selon l'invention reste dans l'échelle préférentielle de viscosité obtenue après formulation.

### Exemple 2.3 : Essai de moussage avec l'agent antimoussant intégré dans la suspension

Le matériel utilisé est :
- Bécher de 1L ;
- Malaxeur à haut taux de cisaillement ;
- une suspension d'hydroxyde de magnésium standard (MH1) telle que décrite dans l'exemple 2.1 ;
- une suspension d'hydroxyde de magnésium selon l'invention (MH1AM4) contenant :
   53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre),
   0,25% en masse par rapport à la masse de particules d'un dispersant Polyéther polycarboxylate en solution aqueuse ayant une teneur en solide 40% et
   300 ppm d'agent anti-mousse AM4 ;
- une suspension d'hydroxyde de magnésium sans dispersant (MH1') contenant :
   53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre) ;
- une solution de dispersant (D1) contenant du Polyéther polycarboxylate en solution aqueuse concentrée à 2% en masse par rapport à la masse d'eau ;
- une suspension d'hydroxyde de magnésium standard (MH2) telle que décrite dans l'exemple 2.1 ;
- une suspension d'hydroxyde de magnésium selon l'invention (MH2AM4) contenant :
   58% en masse par rapport à la masse total de la suspension de particules d'hydroxyde de magnésium de distribution granulométrique D₁₀ = 2,36µm, D₅₀ = 16,2 µm et D₉₀ = 66,4 µm (mesurée par le granulomètre laser Mastersizer 2000 de Malvern Instruments après dilution de la suspension au 20000^{ème} et passage au granulomètre), et
   2,3% en masse par rapport à la masse de particules d'un dispersant polyacrylate de sodium en solution aqueuse ayant une teneur en solide de 40%
      et
   300 ppm d'agent anti-mousse AM4 ;
- une solution de dispersant (D2) contenant du polyacrylate de sodium en solution aqueuse concentrée à 2% en masse par rapport à la masse d'eau ;
- une suspension d'hydroxyde de magnésium standard (MH3) telle que décrite dans l'exemple 2.1 ;
- une suspension d'hydroxyde de magnésium selon l'invention (MH3AM4) contenant :
   53% en masse par rapport à la masse total de la suspension de particules d'hydroxyde de magnésium de distribution granulométrique D₁₀ = 0,96 µm, D₅₀ = 4,86 µm et D₉₀ = 37,42 µm (mesurée par le granulomètre laser Mastersizer 2000 de Malvern Instruments après dilution de la suspension au 20000^{ème} et passage au granulomètre), et
   5,0% en masse par rapport à la masse de particules d'un dispersant appartenant à la catégorie des lignosulfonates en solution aqueuse ayant une teneur en solide de 40% et
   300 ppm d'agent anti-mousse AM4 ;
- une solution de dispersant (D3) contenant du lignosulfonate de sodium en solution aqueuse concentrée à 4% en masse par rapport à la masse d'eau.

La méthodologie du test est la suivante :
- Dilution de la suspension évaluée par 10. Le pH de cette solution est tel que : pH = 10 ;
- 400 mL de suspension ou de solution sont agitées vigoureusement pendant 10 minutes ;
- Le taux de volume incrémental est mesuré et déterminé en % volumique.
- L'évolution du volume incrémental après la fin de l'agitation est évaluée qualitativement

Les résultats sont présentés dans le tableau 5 ci-après.

**Tableau 5**

| **N°** | **Typologie de l'essai** | **Incrémentation de volume (%)** | **Evolution de la mousse** |
|---|---|---|---|
| **1** | Suspension standard MH1 diluée | 8 % | Mousse stable Coalescence lente |
| **3** | Suspension standard MH1 vieillie d'un an | 7,5 % | Mousse stable Coalescence lente |
| **4** | Solution de dispersant D1 | 2 % | Léger moussage Coalescence assez rapide |
| **5** | Suspension MH1' sans dispersant diluée | 0 % | Pas de moussage |
| **6** | Suspension MH1AM4 selon l'invention diluée | 2 % | Mousse instable Coalescence rapide |
| **7** | Suspension MH1AM4 selon l'invention vieillie de 2 mois diluée | 2 % | Mousse instable Coalescence rapide |
| **8** | Suspension standard MH2 diluée | 4% | Léger moussage Coalescence assez rapide |
| **9** | Solution de dispersant D2 | 2 % | Léger moussage Coalescence assez rapide |
| **10** | Suspension MH2AM4 selon l'invention diluée | 0% | Pas de moussage |
| **11** | Suspension standard MH3 diluée | 4% | Léger moussage Coalescence assez rapide |
| **12** | Solution de dispersant D3 | 2% | Léger moussage Coalescence assez rapide |
| **13** | Suspension MH3AM4 selon l'invention diluée | 0% | Pas de moussage |

Les résultats montrent que l'agent anti-mousse AM4 est efficace pour réduire le phénomène de moussage occasionné par la présence simultanée de particules solides et de molécules de dispersant dans un système pouvant correspondre à une situation de surdosage en suspension d'hydroxyde de magnésium.

Il n'y a, qui plus est, aucun effet de vieillissement sur les 2 premiers mois des propriétés antimoussantes de la suspension selon l'invention.

### Exemple 3 : essai grandeur nature de la suspension selon l'invention contenant l'anti-mousse AM4

Le protocole est le suivant : Le navire A est un porte-conteneur de 400 m de long et 60 m de large. Consommant du fioul lourd (> 2% en masse de Soufre), il se conforme aux régulations de l'Organisation maritime internationale (OMI) en procédant à un lavage de ses gaz d'échappement, une désulfuration en voie humide présentant des cycles de fonctionnement en Close Loop.

Le navire A a donc besoin d'un agent alcalin afin de pouvoir neutraliser l'acidité apportée par l'absorption du SO₂ dans ses eaux de lavage. L'alcalin choisi est une suspension d'hydroxyde de magnésium.

En cours d'opération, il a été observé un débordement du tank de stockage de la solution de lavage (labellisé « holding tank ») sur le schéma de la figure 2. L'origine des causes de ce débordement a été investiguée et déterminée. En effet, le tank de stockage est équipé d'évents permettant la dépressurisation du tank suite à l'arrivée d'air dans ce dernier à cause du transport en conduites non totalement immergées. La capacité d'extraction de ces évents est telle qu'ils sont capables d'extraire de la mousse, bien moins dense que le liquide porteur, vers l'extérieur du tank. Cette mousse déborde et se dépose sur le pont du navire. Une fois déposée, elle coalesce et laisse place à un liquide pollué présentant un risque pour les passagers et le personnel à bord.

Avant l'utilisation d'une suspension d'hydroxyde de magnésium selon l'invention comme moyen de remédiation, plusieurs solutions ont été investiguées sans donner de résultats probants. Ces solutions correspondant à des modifications du système de désulfuration embarquée :
- Modification de la consigne de niveau d'eau au sein du tank.
- Réduction de la vélocité de la solution de lavage arrivant au sein du tank en s'assurant de l'efficacité préservée du traitement.
- Modification de l'algorithme de régulation au niveau des seuils de pH afin de réduire au maximum les problèmes de surdosage.

Bien que l'implémentation de ces solutions ait donné des résultats encourageants, ils n'étaient pas suffisants pour anéantir le problème de moussage dans tous les scénarios d'utilisation du système de désulfuration embarquée. Des problèmes de débordement étaient toujours observés lorsque le scrubber principal traitait les gaz d'échappement issu du moteur principal lorsque ce dernier fonctionnait à plus de 20% de son régime maximal.

Ainsi, l'utilisation d'une suspension d'hydroxyde de magnésium aux propriétés antimoussantes fut envisagée, ladite suspension contenant :
53% en masse par rapport à la masse total de la suspension de particules d'hydroxyde de magnésium de distribution granulométrique D₁₀ = 0,67µm, D₅₀ = 2,18 µm et D₉₀ = 10,34 µm (mesurée par le granulomètre laser Mastersizer 2000 de Malvern Instruments après dilution de la suspension au 20000^{ème} et passage au granulomètre),
0,25% en masse par rapport à la masse de particules d'un dispersant Polyéther polycarboxylate en solution aqueuse) ayant une teneur en solide 40% et
300 ppm d'agent anti-mousse AM4.

### Résultats de l'essai

L'utilisation de la suspension d'hydroxyde de magnésium selon l'invention a permis de supprimer le problème de moussage non seulement pour les conditions d'utilisation précédemment problématiques (charge moteur > 20%) mais également dans des scénarios de sollicitation du moteur principal extrêmes (jusqu'à charge moteur > 65 %).

De plus, l'utilisation de cette suspension n'a eu aucun impact significatif sur :
- La quantité de suspension d'hydroxyde de magnésium consommée ;
- Les niveaux de pH atteints dans le tank ;
- L'efficacité du procédé de désulfuration et
- Le bon déroulé des opérations de traitement de l'eau post utilisation.

Il est donc possible de conclure que la suspension d'hydroxyde de magnésium selon l'invention répond efficacement au problème du moussage lors du traitement des eaux de lavage des gaz au sein d'un système de désulfuration embarquée des fumées en voie humide ou semi-humide

## Revendications

1. Suspension aqueuse d'hydroxyde de magnésium comprenant :
a) au moins 40% en masse, avantageusement au moins 50% en masse, plus avantageusement au moins 53% en masse, par rapport à la masse totale de la suspension, de particules d'hydroxyde de magnésium;
b) de 0,001% à 5% en masse, avantageusement de 0,01% à 4% en masse, plus avantageusement de 0,1% à 3% en masse, par rapport à la masse totale de l'hydroxyde de magnésium, d'au moins un dispersant, avantageusement sélectionné dans le groupe constitué par les homopolymères ou copolymères de l'acide acrylique ou de l'acide méthacrylique et leurs sels et un mélange de ceux-ci et les lignosulfonates et leurs mélanges, en particulier choisis parmi les polycarboxylates, les polyéther polycarboxylates, les polyacrylates, les copolymères polyacrylates, les copolymères acryliques et/ou méthacryliques, les sels et un mélange de ceux-ci, et
c) de 0,001% à 5% en masse, avantageusement de 0,005% à 1% en masse, plus avantageusement de 0,01% à 0,5% en masse, par rapport à la masse totale de la suspension, d'au moins un agent anti-mousse, avantageusement sélectionné dans le groupe constitué par les huiles organiques, les polyglycols, les esters ou polyesters d'acide gras et leurs mélanges, lesdites huiles ou polyglycols pouvant contenir des particules organiques ou minérales en suspension,
**caractérisée en ce que** le au moins un agent anti-mousse ne comprend pas d'huile de silicone.

2. Suspension aqueuse selon la revendication 1, **caractérisée en ce que** le au moins un dispersant est un polyéther polycarboxylate ou un polyacrylate, en particulier un sel de polyéther polycarboxylate ou de polyacrylate, plus particulièrement un polyacrylate de sodium.

3. Suspension aqueuse selon l'une quelconque des revendications 1 ou 2, **caractérisée en ce que** l'au moins un agent anti-mousse est une dispersion de particules organiques, en particulier de cire, dans une huile organique, en particulier une huile hydrocarbonée, avantageusement une dispersion de particules de cire dans une huile hydrocarbonée.

4. Suspension aqueuse selon l'une quelconque des revendications 1 à 3, **caractérisée en ce que** les particules d'hydroxyde de magnésium ont une taille moyenne en volume D₉₀ inférieure à 200 µm, préférablement inférieure 45 µm, encore plus préférablement inférieure 15 µm, mesurée par un granulomètre laser.

5. Suspension aqueuse selon l'une quelconque des revendications 1 à 4, **caractérisée en ce que** les particules d'hydroxyde de magnésium ont une taille moyenne en volume D₅₀ inférieure à 40 µm, préférablement inférieure 7 µm, mesurée par un granulomètre laser.

6. Suspension aqueuse selon l'une quelconque des revendications 1 à 5, **caractérisée en ce que** sa viscosité mesurée à 1,7 s⁻¹ à 20°C avec un viscosimètre Brookfield est inférieure à 1000 mPa.s, de préférence inférieure à 700 mPa.s.

7. Suspension aqueuse selon l'une quelconque des revendications 1 à 6, **caractérisée en ce qu'**elle est stable en phase de repos à température ambiante, en particulier le résultat de son « 7^{ème} jour 2^{nd} pour test » est d'au moins 90%.

8. Suspension aqueuse selon l'une quelconque des revendications 1 à 7, **caractérisée en ce que** la surface spécifique des particules d'hydroxyde de magnésium est comprise entre 5 et 100 m²/g.

9. Utilisation de la suspension aqueuse selon l'une quelconque des revendications 1 à 8 pour le traitement des eaux de lavage des gaz au sein d'un système de désulfuration embarquée des fumées en voie humide ou semi-humide, le traitement d'effluents en station d'épuration municipale ou industrielle, dans les procédés ou bioprocédés de transformation industrielle impliquant un processus de fermentation ou de respiration ou dans le procédé de production de papier ou dans l'agriculture.

10. Utilisation selon la revendication 9 en tant qu'agent alcalin anti-mousse.

## Patentansprüche

1. Wässrige Magnesiumhydroxid-Suspension, umfassend:
a) mindestens 40 Ma%, in vorteilhafter Weise mindestens 50 Ma%, noch vorteilhafter mindestens 53 Ma%, bezogen auf die Gesamtmasse der Suspension, Magnesiumhydroxidpartikel;
b) 0,001 bis 5 Ma%, in vorteilhafter Weise 0,01 bis 4 Ma%, noch vorteilhafter 0,1 bis 3 Ma%, bezogen auf die Gesamtmasse des Magnesiumhydroxids, mindestens eines Dispergiermittels, das vorzugsweise aus der Gruppe ausgewählt ist, die aus Homopolymeren oder Copolymeren der Acrylsäure oder Methacrylsäure und deren Salzen und einem Gemisch davon und Lignosulfonaten und deren Gemischen besteht, insbesondere gewählt aus Polycarboxylaten, Polyetherpolycarboxylaten, Polyacrylaten, Polyacrylat-Copolymeren, Acryl- und/oder Methacrylcopolymeren, Salzen und einem Gemisch davon, und
c) 0,001 bis 5 Ma%, in vorteilhafter Weise 0,005 bis 1 Ma%, noch vorteilhafter 0,01 bis 0,5 Ma%, bezogen auf die Gesamtmasse der Suspension, mindestens eines Schaumverhütungsmittels, das in vorteilhafter Weise aus der Gruppe ausgewählt ist, die aus organischen Ölen, Polyglykolen, Fettsäureestern oder -polyestern und deren Gemischen besteht, wobei die Öle oder Polyglykole organische oder mineralische Partikel in Suspension enthalten können,
**dadurch gekennzeichnet, dass** das mindestens eine Schaumverhütungsmittel kein Silikonöl umfasst.

2. Wässrige Suspension nach Anspruch 1, **dadurch gekennzeichnet, dass** das mindestens eine Dispergiermittel ein Polyetherpolycarboxylat oder ein Polyacrylat ist, insbesondere ein Polyetherpolycarboxylat- oder Polyacrylatsalz, vor allem ein Natriumpolyacrylat.

3. Wässrige Suspension nach einem der Ansprüche 1 oder 2, **dadurch gekennzeichnet, dass** das mindestens eine Schaumverhütungsmittel eine Dispersion von organischen Partikeln, insbesondere Wachs, in einem organischen Öl, insbesondere einem Kohlenwasserstofföl, in vorteilhafter Weise eine Dispersion von Wachspartikeln in einem Kohlenwasserstofföl, ist.

4. Wässrige Suspension nach einem der Ansprüche 1 bis 3, **dadurch gekennzeichnet, dass** die Magnesiumhydroxidpartikel eine volumenmittlere Größe D₉₀ unter 200 µm, vorzugsweise unter 45 µm, noch bevorzugter unter 15 µm, gemessen mit einem Lasergranulometer, aufweisen.

5. Wässrige Suspension nach einem der Ansprüche 1 bis 4, **dadurch gekennzeichnet, dass** die Magnesiumhydroxidpartikel eine volumenmittlere Größe D₅₀ unter 40 µm, vorzugsweise unter 7 µm, gemessen mit einem Lasergranulometer, aufweisen.

6. Wässrige Suspension nach einem der Ansprüche 1 bis 5, **dadurch gekennzeichnet, dass** ihre Viskosität, gemessen bei 1,7 s⁻¹ bei 20 °C mit einem Brookfield-Viskosimeter, unter 1000 mPa.s, vorzugsweise unter 700 mPa.s, beträgt.

7. Wässrige Suspension nach einem der Ansprüche 1 bis 6, **dadurch gekennzeichnet, dass** sie in der Ruhephase bei Raumtemperatur stabil ist, insbesondere das Ergebnis ihres "7^{th} day 2^{nd} for test" mindestens 90 % beträgt.

8. Wässrige Suspension nach einem der Ansprüche 1 bis 7, **dadurch gekennzeichnet, dass** die spezifische Oberfläche der Magnesiumhydroxidpartikel zwischen 5 und 100 m²/g liegt.

9. Verwendung der wässrigen Suspension nach einem der Ansprüche 1 bis 8 zur Behandlung von Gaswaschwasser innerhalb eines eingebauten Rauchgasentschwefelungssystems im Nass- oder Halbnassverfahren, zur Behandlung von Abwässern in kommunalen oder industriellen Kläranlagen, in industriellen Verarbeitungsprozessen oder Bioprozessen, die einen Fermentations- oder Atmungsprozess beinhalten, oder im Papierherstellungsprozess oder in der Landwirtschaft.

10. Verwendung nach Anspruch 9 als alkalisches Schaumverhütungsmittel.

## Claims

1. An aqueous magnesium hydroxide suspension comprising:
a) at least 40 wt.%, advantageously at least 50 wt.%, more preferably at least 53 wt.%, relative to the total weight of the suspension, of magnesium hydroxide particles;
b) from 0.001 to 5 wt.%, advantageously from 0.01 to 4 wt.%, more advantageously from 0.1 to 3 wt.%, relative to the total weight of the magnesium hydroxide, of at least one dispersant, advantageously selected from the group consisting of homopolymers or copolymers of acrylic acid or methacrylic acid and their salts and a mixture thereof and lignosulfonates and mixtures thereof, in particular selected from polycarboxylates, polyether polycarboxylates, polyacrylates, polyacrylate copolymers, acrylic and/or methacrylic copolymers, salts and a mixture thereof, and
c) from 0.001 to 5 wt.%, advantageously from 0.005 to 1 wt.%, more advantageously from 0.01 to 0.5 wt.%, relative to the total weight of the suspension, of at least one anti-foaming agent, advantageously selected from the group consisting of organic oils, polyglycols, fatty acid esters or polyesters and mixtures thereof, said oils or polyglycols possibly containing organic or mineral particles in suspension
**characterized in that** the at least one anti-foaming agent does not comprise silicone oil.

2. The aqueous suspension according to claim 1, **characterized in that** the at least one dispersant is a polyether polycarboxylate or a polyacrylate, in particular a polyether polycarboxylate or polyacrylate salt, more particularly a sodium polyacrylate.

3. The aqueous suspension according to any one of claims 1 or 2, **characterized in that** the at least one anti-foaming agent is a dispersion of organic particles, in particular of wax, in an organic oil, in particular a hydrocarbon oil, advantageously a dispersion of wax particles in a hydrocarbon oil.

4. The aqueous suspension according to any one of claims 1 to 3, **characterized in that** the magnesium hydroxide particles have a volume average size D₉₀ less than 200 µm, preferably less than 45 µm, even more preferably less than 15 µm, measured by a laser particle size analyzer.

5. The aqueous suspension according to any one of claims 1 to 4, **characterized in that** the magnesium hydroxide particles have a volume average size D₅₀ less than 40 µm, preferably less than 7 µm, measured by a laser particle size analyzer.

6. The aqueous suspension according to any one of claims 1 to 5, **characterized in that** its viscosity measured at 1.7 s⁻¹ at 20°C with a Brookfield viscometer, is less than 1000 mPa.s, preferably less than 700 mPa.s.

7. The aqueous suspension according to any one of claims 1 to 6, **characterized in that** it is stable in the rest phase at room temperature, in particular the result of its "7^{th} day 2^{nd} pour test" is at least 90%.

8. The aqueous suspension according to any one of claims 1 to 7, **characterized in that** the specific surface area of the magnesium hydroxide particles is comprised between 5 and 100 m²/g.

9. A use of the aqueous suspension according to any one of claims 1 to 8 for the treatment of gas washing water in an on-board wet or semiwet flue gas desulfurization system, the treatment of effluent at a municipal or industrial wastewater treatment plant, in industrial transformation processes or bioprocesses involving a fermentation or respiration process or in the paper production process or in agriculture.

10. The use according to claim 9 as an alkaline anti-foaming agent.
